# EUROPEAN PATENT APPLICATION

(11) **EP 4 539 524 A1**
(43) Date of publication of application: **16.04.2025**
(21) Application number: 23829434.2
(22) Date of filing: 23.02.2023
(51) Int. Cl.: H04W 12/069, H04W 12/04

(54) **INFORMATION WRITING METHOD AND APPARATUS**

(30) Priority: 30.06.2022 CN 202210770158
(71) Applicant: Huawei Technologies Co., Ltd., Shenzhen, Guangdong 518129 (CN)
(72) Inventor: ZHOU, Xiaoyun, Shenzhen, Guangdong 518129 (CN); ZONG, Zaifeng, Shenzhen, Guangdong 518129 (CN); LIAO, Ting, Shenzhen, Guangdong 518129 (CN); ZHENG, Xiaochun, Shenzhen, Guangdong 518129 (CN)
(74) Representative: Isarpatent
(86) International application number: PCT/CN2023/077919
(87) International publication number: WO 2024/001241

(57) **Abstract**

An information writing method and an apparatus are provided. The method includes: A management network element determines a terminal identifier and authentication information corresponding to the terminal identifier. The management network element sends first information to a writing device, where the first information includes the terminal identifier and the authentication information, allowing the terminal identifier and the authentication information to be written into a terminal. The management network element obtains an execution result from the writing device. The management network element sends second information to a data repository network element based on the execution result, where the second information includes the terminal identifier and the authentication information. In the method, operator networks may participate in a tag printing process, so that the operators implement subscription management on tags. In addition, the operator networks can authenticate the tags based on information stored in the data repository network element, enhancing control of the operator network over the tag.

## Description

### CROSS-REFERENCE TO RELATED APPLICATIONS

This application claims priority to Chinese Patent Application No. 202210770158.1, filed with the China National Intellectual Property Administration on June 30, 2022 and entitled "INFORMATION WRITING METHOD AND APPARATUS", which is incorporated herein by reference in its entirety.

### TECHNICAL FIELD

This application relates to the field of communication technologies, and in particular, to an information writing method and an apparatus.

### BACKGROUND

An internet of things can implement information sharing between things and intelligent collection, transferring, processing, and execution. For a product having an electronic tag (radio frequency identification, RFID), there is a unique electronic product code (electronic product code, EPC) of the product in the electronic tag. When the product moves past a reader/writer, information about the product is transmitted to a specified computer over the internet.

Usually, based on an indication of an application service, the card reader can perform inventory operations on tags on products such as read (read), write (write), access (access), or kill (kill).

In conventional technologies, enterprises typically manage their own tags, but how operators perform subscription management on the tags has not been implemented.

### SUMMARY

Embodiments of this application provide an information writing method and an apparatus, to implement subscription management on tags and improve tag security.

According to a first aspect, this application provides an information writing method, including the following process. A management network element determines a terminal identifier and authentication information corresponding to the terminal identifier. The management network element sends first information to a writing device, where the first information includes the terminal identifier and the authentication information, allowing the terminal identifier and the authentication information to be written into a terminal. The management network element obtains an execution result from the writing device. The management network element sends second information to a data repository network element based on the execution result, where the second information includes the terminal identifier and the authentication information.

For example, the terminal may be a passive terminal or a passive tag. Optionally, the authentication information may be symmetric key information and/or asymmetric key information. In a possible implementation, the terminal is a terminal identified by the terminal identifier.

In the method, the management network element sends the terminal identifier and the authentication information to the writing device, the writing device writes the terminal identifier and the authentication information into the terminal and sends the terminal identifier and the authentication information to the data repository network element, and the data repository network element stores the terminal identifier and the authentication information. An operator network may participate in an information writing process (for example, a tag printing process), so that the operator implements subscription management on a tag. In addition, the operator network may authenticate the tag based on information stored in the data repository network element, so that control of the operator network over the tag can be enhanced, and tag security can be improved.

Optionally, the management network element may further store the terminal identifier and the authentication information of the terminal.

In a possible implementation, before the management network element sends the first information to the writing device, the management network element may further receive a first request message from an application network element, where the first request message includes writing operation indication information and application information.

The writing operation indication information is used to request to perform a writing operation on the terminal, and the application information identifies an application that requests the writing operation and is used to determine a value range of the terminal identifier. For example, the application information includes but is not limited to at least one of an application network element identifier and an application identifier.

Optionally, the first request message may further include one or more of the following: a device identifier of the terminal, a quantity of terminals that request terminal identifier writing, and the value range of the terminal identifier. The terminal identifier is usually an identifier allocated to the terminal by a user who uses the terminal, and the device identifier is usually an identifier allocated to the terminal by a manufacturer that manufactures the terminal. Both the terminal identifier and the device identifier may uniquely identify the terminal. The quantity of terminals identifies that there may be one or more terminals. If there are a plurality of terminals, information about the plurality of terminals may be written in batches. For the value range of the terminal identifier, it indicates that a terminal identifier to be written into the terminal may be selected from the value range. In a possible implementation, the application information may be used to determine the value range of the terminal identifier. In other words, the value range of the terminal identifier corresponds to the application information, and the value range of terminal identifier is a value range that is of the terminal identifier and that corresponds to the application information.

In this implementation, an operator network may perform information writing based on a request of a third-party application, and an operator may participate in an information writing process, to implement subscription management on a tag.

Optionally, the first information may further include one or more of the following: the application information, the device identifier of the terminal, the quantity of terminals that request terminal identifier writing, and an identifier of the writing device.

Optionally, the second information may further include one or more of the following: the application information, the device identifier of the terminal, the quantity of terminals into which the terminal identifier is written, and the identifier of the writing device.

In a possible implementation, before the management network element determines the terminal identifier, the management network element may further send the application information to the data repository network element. The management network element receives the value range of the terminal identifier from the data repository network element.

When determining the terminal identifier, the management network element may determine the terminal identifier based on the value range of the terminal identifier.

For example, the management network element may select the terminal identifier from the value range of the terminal identifier.

In this implementation, the management network element obtains an available value range of the terminal identifier from the data repository network element, and determines the terminal identifier from the value range of the terminal identifier, to enhance control over a tag.

In a possible implementation, before the management network element sends the first information to the writing device, the management network element may further receive a second request message from an application network element, where the second request message includes a value range of the terminal identifier.

When determining the terminal identifier, the management network element may determine the terminal identifier based on the value range of the terminal identifier.

In this implementation, the management network element obtains an available value range of the terminal identifier from the application network element, and determines the terminal identifier from the value range of the terminal identifier, to enhance control over the tag.

In a possible implementation, when the management network element determines the authentication information corresponding to the terminal identifier, the management network element may generate the authentication information corresponding to the terminal identifier, or may obtain the authentication information from another network element, so that flexibility of tag management can be improved.

In a possible implementation, before the management network element sends the first information to the writing device, the management network element may further receive a third request message from an application network element, where the third request message includes the terminal identifier and the authentication information.

In this implementation, the management network element may obtain the terminal identifier and the authentication information from the application network element, so that control over a tag can be enhanced.

In a possible implementation, if the first request message, the second request message, or the third request message further includes a device identifier of the terminal, the first information and the second information further include the device identifier.

In a possible implementation, the first request message, the second request message, or the third request message includes a quantity of terminals that request terminal identifier writing, and the management network element may further determine a quantity of terminal identifiers and a quantity of pieces of authentication information based on the quantity of terminals.

For example, the quantity of terminals, the quantity of terminal identifiers, and the quantity of pieces of authentication information are the same.

The management network element may write the terminal identifiers of the quantity and the pieces of authentication information of the quantity into corresponding terminals in batches, to implement subscription management on a tag.

In a possible implementation, the writing device is user equipment or an access network element having a writing function.

In a possible implementation, when sending the first information to the writing device, the management network element may send the first information to the writing device through a control plane, or may send the first information to the writing device through a user plane, so that flexibility of tag management can be improved.

In a possible implementation, when the writing device is the user equipment, and the management network element sends the first information to the writing device, the management network element may send the first information to the writing device via a mobility management network element with which the writing device registers. In this implementation, the management network element may send the first information to the writing device through the control plane.

Optionally, a registration message used when the writing device registers with the mobility management network element may include an identifier of the writing device.

Optionally, the first request message may include the identifier of the writing device.

For example, when sending the first information to the writing device, the management network element may determine, based on the identifier of the writing device, the mobility management network element with which the writing device registers, and send the first information to the writing device via the mobility management network element.

In a possible implementation, the management network element may further send an identifier of the writing device to the mobility management network element.

In a possible implementation, the management network element may further receive a fourth request message from the writing device, where the fourth request message is used by the writing device to register with the management network element.

Optionally, a registration message used when the writing device registers with the management network element may include an identifier of the writing device.

In a possible implementation, when receiving the fourth request message from the writing device, the management network element may receive the fourth request message from the writing device through a user plane.

When sending the first information to the writing device, the management network element may send the first information to the writing device through the user plane. In this implementation, the management network element may send the first information to the writing device through the user plane.

In a possible implementation, the terminal identifier includes an EPC.

According to a second aspect, this application provides an information writing method, including the following process. A writing device receives first information from a management network element, where the first information includes a terminal identifier and authentication information corresponding to the terminal identifier. The writing device writes the terminal identifier and the authentication information into a terminal. The writing device sends an execution result to the management network element.

The execution result indicates that the foregoing writing operation succeeds to be performed or fails to be performed.

In a possible implementation, the writing device is user equipment or an access network element having a writing function.

In a possible implementation, when the writing device is the user equipment, and the writing device receives the first information from the management network element, the writing device may receive the first information from the management network element via a mobility management network element with which the writing device registers.

In a possible implementation, the writing device may further send a fourth request message to the management network element, where the fourth request message is used by the writing device to register with the management network element.

In a possible implementation, when sending a second request message to the management network element, the writing device may send the second request message to the management network element through a user plane.

When receiving the first information from the management network element, the writing device may receive the first information from the management network element through the user plane.

In a possible implementation, the first information further includes a device identifier of the terminal.

When writing the terminal identifier and the authentication information into the terminal, the writing device may write the terminal identifier and the authentication information into the terminal corresponding to the device identifier.

In a possible implementation, the terminal identifier includes an EPC.

According to a third aspect, this application provides an information writing method, including the following process. A data repository network element receives second information from a management network element, where the second information includes a terminal identifier and authentication information corresponding to the terminal identifier. The data repository network element stores the terminal identifier and the authentication information.

In a possible implementation, the data repository network element may further receive application information from the management network element, where the application information is used to determine a value range of the terminal identifier. The data repository network element sends the value range of the terminal identifier to the management network element.

In a possible implementation, the data repository network element may further send the second information to an authentication server network element, where the second information is used by the authentication server network element to authenticate a terminal.

In a possible implementation, the terminal identifier includes an EPC.

According to a fourth aspect, a communication apparatus is provided. The communication apparatus may be a management network element, a writing device, or a data repository network element, or may be a chip disposed in the management network element, the writing device, or the data repository network element. The communication apparatus may implement the method provided in any one of the foregoing aspects.

The communication apparatus includes a corresponding module, unit, or means (means) for implementing the foregoing methods. The module, unit, or means may be implemented by using hardware or software, or implemented by using hardware by executing corresponding software. The hardware or the software includes one or more modules or units corresponding to the foregoing functions.

According to a fifth aspect, a communication apparatus is provided, and includes a transceiver unit. Optionally, the communication apparatus further includes a processing unit. The communication apparatus may implement the method provided in any one of the aspects or the implementations of the aspects.

According to a sixth aspect, a communication apparatus is provided, and includes a processor. The processor may be configured to perform the method provided in any one of the foregoing aspects or the implementations of the aspects. Optionally, the apparatus further includes a memory. The processor is coupled to the memory. The memory is configured to store a computer program or instructions. The processor may execute the program or the instructions in the memory, so that the apparatus can perform the method provided in any one of the foregoing aspects or the implementations of the foregoing aspects.

According to a seventh aspect, a communication apparatus is provided. The apparatus includes an interface circuit and a logic circuit, and the logic circuit is coupled to the interface circuit. The interface circuit may be a code/data read/write interface circuit. The interface circuit is configured to: receive computer-executable instructions (the computer-executable instructions are stored in a memory, and may be directly read from the memory or may be read through another component), and transmit the computer-executable instructions to the logic circuit, so that the logic circuit runs the computer-executable instructions, to perform the method provided in any one of the foregoing aspects or the implementations of the aspects.

In some possible designs, the communication apparatus may be a chip or a chip system.

According to an eighth aspect, a communication apparatus is provided, and includes a processor. The processor is coupled to a memory. The processor is configured to: read instructions stored in the memory, receive a signal through a receiver, and transmit a signal through a transmitter, to perform the method provided in any one of the foregoing aspects or the implementations of the aspects.

Optionally, there may be one or more processors, and one or more memories. Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

The communication apparatus may be a chip, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated in the processor, or may be located outside the processor and independently exist.

According to a ninth aspect, a processor is provided, and includes an input circuit, an output circuit, and a processing circuit. The processing circuit is configured to: receive a signal by using the input circuit, and transmit a signal by using the output circuit, so that the processor performs the method provided in any one of the foregoing aspects or the implementations of the aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by using the input circuit may be received and input by, for example, but not limited to, a receiver, a signal output by the output circuit may be output to, for example, but not limited to, a transmitter and transmitted by the transmitter, and the input circuit and the output circuit may be a same circuit. The circuit serves as the input circuit and the output circuit at different moments. Specific implementations of the processor and various circuits are not limited in this application.

According to a tenth aspect, a communication apparatus is provided, and includes a logic circuit and an input/output interface. The input/output interface is configured to communicate with a module other than the communication apparatus. The logic circuit is configured to run a computer program or instructions to perform the method provided in any design of any one of the foregoing aspects. The communication apparatus may be the management network element, the writing device, or the data repository network element in any one of the foregoing aspects, an apparatus including the management network element, the writing device, or the data repository network element, or an apparatus, for example, a chip, included in the management network element, the writing device, or the data repository network element.

Alternatively, the input/output interface may be a code/data read/write interface circuit or a communication interface. The input/output interface is configured to: receive a computer program or instructions (the computer program or the instructions are stored in a memory, and may be directly read from the memory or may read through another component), and transmit the computer program or the instructions to the input/output interface, so that the input/output interface runs the computer program or the instructions, to perform the method in any one of the foregoing aspects.

Optionally, the communication apparatus may be a chip.

According to an eleventh aspect, a computer program product is provided. The computer program product includes a computer program (which may also be referred to as code or instructions). When the computer program is run, a computer is enabled to perform the method provided in any one of the foregoing aspects or the implementations of the foregoing aspects.

According to a twelfth aspect, a computer-readable medium is provided. The computer-readable medium stores a computer program (which may also be referred to as code or instructions). When the computer program is run on a computer, the computer is enabled to perform the method provided in any one of the foregoing aspects or the implementations of the foregoing aspects.

According to a thirteenth aspect, a chip system is provided. The chip system includes a processor and an interface, and is configured to support a communication apparatus in implementing a function provided in any one of the foregoing aspects or the implementations of the foregoing aspects. In a possible design, the chip system further includes a memory, configured to store necessary information and data of the foregoing communication apparatus. The chip system may include a chip, or may include a chip and another discrete component.

According to a fourteenth aspect, a chip apparatus is provided. The chip apparatus includes an input interface and/or an output interface. The input interface may implement a receiving function provided in any one of the foregoing aspects or the implementations of the aspects. The output interface may implement a sending function provided in any one of the foregoing aspects or the implementations of the aspects.

According to a fifteenth aspect, a functional entity is provided. The functional entity is configured to implement the method provided in any one of the foregoing aspects or the implementations of the foregoing aspects.

According to a sixteenth aspect, a communication system is provided, and includes a management network element configured to perform the method in the first aspect, a writing device configured to perform the method in the second aspect, and a data repository network element configured to perform the method in the second aspect.

For technical effects brought by any one of the implementations of the second aspect to the sixteenth aspect, refer to the technical effects brought by the first aspect. Details are not described herein again.

### BRIEF DESCRIPTION OF DRAWINGS

FIG. 1 is a diagram of an architecture of a 5G communication system;
FIG. 2 is a diagram of a tag management system;
FIG. 3 is a diagram of an information writing process according to an embodiment of this application;
FIG. 4 is a diagram of a system architecture according to an embodiment of this application;
FIG. 5 is a diagram of an information writing process according to an embodiment of this application;
FIG. 6 is a diagram of a system architecture according to an embodiment of this application;
FIG. 7 is a diagram of an information writing process according to an embodiment of this application;
FIG. 8 is a diagram of a system architecture according to an embodiment of this application;
FIG. 9 is a diagram of an information writing process according to an embodiment of this application;
FIG. 10 is a diagram of a system architecture according to an embodiment of this application;
FIG. 11 is a diagram of an information writing process according to an embodiment of this application;
FIG. 12 is a diagram of a structure of a communication apparatus according to an embodiment of this application;
FIG. 13 is a diagram of a structure of a communication apparatus according to an embodiment of this application; and
FIG. 14 is a diagram of a structure of a communication apparatus according to an embodiment of this application.

### DESCRIPTION OF EMBODIMENTS

The following further describes in detail this application with reference to the accompanying drawings.

Technical solutions in embodiments of this application may be applied to a mobile communication system. For example, the mobile communication system may be a 4th generation (4th Generation, 4G) communication system (for example, a long term evolution (long term evolution, LTE) system), a 5th generation (5th generation, 5G) mobile communication system (for example, a new radio (new radio, NR) system), a future mobile communication system such as 6G, or the like.

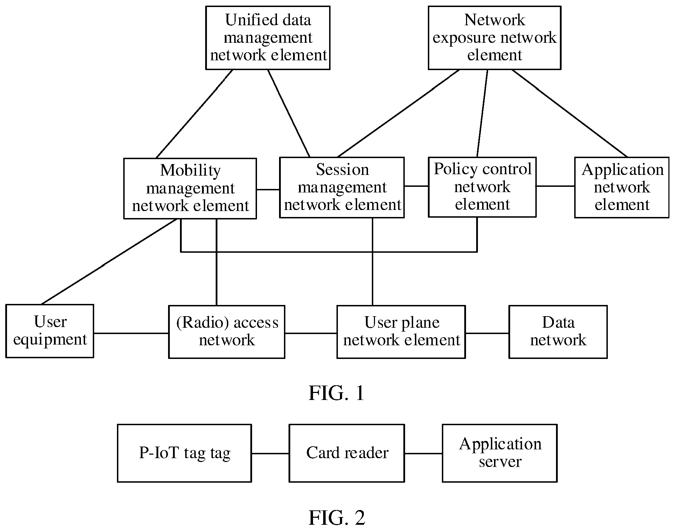

FIG. 1 is a diagram of a network architecture according to an embodiment of this application. The network architecture includes user equipment, a (radio) access network device, a user plane network element, a data network, a mobility management network element, a session management network element, an application network element, a unified data management network element, a policy control network element, a network exposure network element, and the like. The following separately describes the network elements in the network architecture.
1. User equipment (user equipment, UE): The user equipment may also be referred to as an access terminal, a terminal, a subscriber unit, a subscriber station, a mobile station, a remote station, a remote terminal, a mobile device, a user terminal, a user agent, a user apparatus, or the like. The terminal in embodiments of this application may be a mobile phone (mobile phone), a tablet computer (tablet computer), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices such as glasses, gloves, watches, clothes, and shoes, that are intelligently designed and developed for daily wear by using a wearable technology. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-size devices that can implement all or some of functions without depending on smartphones, for example, smart watches or smart glasses, and include devices that are dedicated to only one type of application function and need to be used together with other devices such as smartphones, for example, various smart bands or smart jewelry for monitoring physical signs.

2. (Radio) access network device (radio access network, (R)AN): The access network device may also be referred to as an access device. The (R)AN can manage radio resources, provide an access service for the user equipment, and complete forwarding of user equipment data between the user equipment and a core network. The (R)AN may alternatively be understood as a base station in a network.

For example, the access network device in embodiments of this application may be any communication device that has a wireless transceiver function and that is configured to communicate with the user equipment. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a building baseband unit (building baseband unit, BBU), a transmission reception point (transmission reception point, TRP), a transmission point (transmission point, TP), or the like. The access network device may alternatively be a next generation base station, a next generation NodeB (generation NodeB, gNB), or a transmission point (TRP or TP) in a 5G system, for example, an NR system, or one antenna panel or a group (including a plurality of antenna panels) of antenna panels of a base station in the 5G system, or may be a network node that forms the gNB or the transmission point, for example, a baseband unit (BBU) or a distributed unit (distributed unit, DU).

In some deployments, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer or is transformed from the information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, and an AAU node. In addition, the CU may be classified as an access network device in an access network (radio access network, RAN), or the CU may be classified as an access network device in the core network (core network, CN). This is not limited in this application.

3. User plane network element: The user plane network element, serving as an interface to a data network, completes user plane data forwarding, session/flow-level charging statistics collection, bandwidth limitation, and other functions, that is, packet routing and forwarding, quality of service (quality of service, QoS) handling for user plane data, and the like.

In a 5G communication system, the user plane network element may be a user plane function (user plane function, UPF) network element.

4. Data network: The data network is configured to provide a network for data transmission, for example, provide an operator service, an internet access service, or a third-party service, and includes a server, where the server end implements video source coding, rendering, and the like. In the 5G communication system, the data network may be a data network (data network, DN).

5. Mobility management network element: The mobility management network element is mainly used for mobility management, access management, and the like. In the 5G communication system, the access management network element may be an access and mobility management function (access and mobility management function, AMF), and mainly performs mobility management, access authentication/authorization, and other functions. In addition, the mobility management network element is further responsible for transferring a user policy between the terminal and a policy control function (policy control function, PCF) network element.

6. Session management network element: The session management network element is mainly used for session management, internet protocol (internet protocol, IP) address allocation and management of the user equipment, selection of a manageable user plane function, termination of an interface towards a policy control and charging function, downlink data notification, and the like.

In the 5G communication system, the session management network element may be a session management function (session management function, SMF) network element, and completes terminal IP address allocation, UPF selection, charging and QoS policy control, and the like.

7. Application network element: In the 5G communication system, the application network element may be an application function (application function, AF) network element, represents an application function of a third party or an operator, is an interface for the 5G network to obtain external application data, and is mainly configured to transfer a requirement of an application side for a network side.

8. Unified data management network element: The unified data management network element is responsible for management of a user identifier, subscription data, and authentication data, and serving network element registration management of the user. In the 5G communication system, the unified data management network element may be a unified data management (unified data management, UDM).

9. Policy control network element: The policy control network element includes a user subscription data management function, a policy control function, a charging policy control function, QoS control, and the like, is configured for a unified policy framework to govern network behavior, and provides policy rule information and the like for a control plane function network element (for example, the AMF network element or the SMF network element).

In the 5G communication system, the policy control network element may be a PCF.

10. Network exposure network element: In the 5G communication system, the network exposure network element may be a network exposure function (network element function, NEF) network element, is mainly configured for exposure of services and capabilities of a 3GPP network function to the AF, and may also enable the AF to provide information for the 3GPP network function.

Optionally, the network architecture may include more or fewer network elements than the network elements shown above. For example, the network architecture may further include an authentication server, a network function repository function network element, a network slice selection function network element, and the like. The authentication server performs security authentication on the user. In the 5G communication system, the authentication server may be an authentication server function (authentication server function, AUSF) network element. The network function repository function network element provides a storage function and a selection function of network function entity information for another core network element. In the 5G communication system, the network element may be a network function repository function (network function repository function, NRF) network element. The network slice selection function network element is responsible for selecting a network slice for the UE. In the 5G communication system, the application network element may be a network slice selection function (network slice selection function, NSSF) network element.

The foregoing function network element may be a network element in a hardware device, a software function running on dedicated hardware, or a virtualization function instantiated on a platform (for example, a cloud platform). One or more services may be obtained through division based on the foregoing function network element. Further, a service independent of a network function may exist. In this application, an instance of the function network element, an instance of the service included in the function network element, and an instance of the service that is independent of the network function may all be referred to as service instances.

An internet of things can implement information sharing between things and intelligent collection, transferring, processing, and execution. In a passive internet of things (passive internet of things, P-IoT), internet of things terminals (for example, RFIDs or tags (Tag)) may be deployed in logistics and warehousing scenarios, industrial manufacturing scenarios, and other scenarios. For example, if internet of things terminals are deployed in the logistics and warehousing scenarios, the P-IoT can implement goods inventory and tracking, and transportation process environment and goods status monitoring for high-value goods (such as vaccines). For another example, if internet of things terminals are deployed in the industrial manufacturing scenarios, the P-IoT can implement environment and device status monitoring.

A P-IoT internet of things terminal may be an active terminal, a passive terminal, or a semi-passive terminal. The passive terminal or the semi-passive terminal can send information only under external excitation, which is typically from a card reader (or referred to as a reader/writer). Refer to FIG. 2. A card reader is deployed between a P-IoT tag and an application server. Based on an indication of the application server, the card reader may read, write, access, or kill the P-IoT tag, or perform other inventory operations on the P-IoT tag.

Usually, enterprises themselves manage tags, but how operators perform subscription management on the tags has not implemented in conventional technologies.

Based on this, embodiments of this application provide an information writing method, to implement subscription management performed by operators on tags, and enhance control of the operators over the tags. In the method, a management network element may send a determined terminal identifier and authentication information corresponding to the determined terminal identifier to a writing device, and the writing device writes the terminal device identifier and the authentication information into a corresponding terminal. The management network element may send the terminal identifier and the authentication information to a data repository network element based on an execution result of the writing device, and the data repository network element stores the terminal identifier and the authentication information for subsequent tag management.

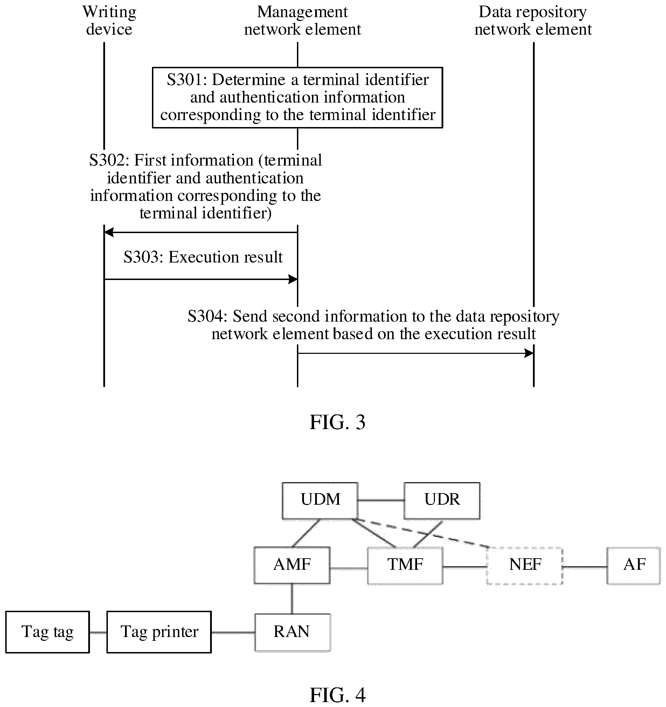

FIG. 3 is diagram of an information writing process, including the following steps.

S301: A management network element determines a terminal identifier and authentication information corresponding to the terminal identifier.

The management network element may implement subscription management on a terminal (for example, a tag), for example, write and authenticate terminal information. For example, in a 5G network, the management network element may be an NEF, a tag management function (tag management function, TMF), or a UDM.

The authentication information is used to authenticate and authorize the terminal when the terminal corresponding to the terminal identifier subsequently accesses a network. In a possible implementation, the authentication information may be key information, for example, symmetric key information or asymmetric key information. This is not limited herein.

In a possible implementation, the terminal is a passive (or semi-passive) terminal, a passive (or semi-passive) tag, a zero power consumption terminal, an ambient power-enabled (Ambient power-enabled) terminal, or the like.

For example, the terminal identifier is an EPC. Usually, the EPC is an identifier allocated to the terminal by a user who uses the terminal, and may be considered as a user identifier.

S302: The management network element sends first information to a writing device. Correspondingly, the writing device receives the first information.

The writing device is a device having a writing function (or a tag printing function). For example, the writing device may be user equipment. In other words, the writing device accesses the network as the user equipment. For another example, the writing device may be an access network device (for example, a (R)AN in the 5G network) having the writing function.

The first information includes the terminal identifier and the authentication information corresponding to the terminal identifier.

The first information is used by the writing device to write the terminal identifier and the authentication information into the terminal. In other words, the management network element sends the first information to the writing device, allowing the terminal identifier and the authentication information to be written into the terminal.

S303: The writing device sends an execution result to the management network element. Correspondingly, the management network element receives the execution result.

S304: The management network element sends second information to a data repository network element based on the execution result. Correspondingly, the data repository network element receives the second information.

The second information includes the terminal identifier and the authentication information corresponding to the terminal identifier.

In a possible implementation, before S302 (or before S301), an application network element may send a first request message to the management network element, and the management network element receives the first request message. The first request message includes writing operation indication information. In other words, the first request message is used to request to perform a writing operation on the terminal.

Optionally, the first request message may further include application information. The application information identifies an application that requests the writing operation and a value range of the terminal identifier. The application information includes but is not limited to at least one of an application network element identifier and an application identifier. For example, before S301, the management network element may further send the application information to the data repository network element, and the data repository network element receives the application information and then sends, to the management network element, the value range that is of the terminal identifier and that corresponds to the application information. In S301, the management network element may determine the terminal identifier based on the received value range of the terminal identifier.

Optionally, the first request message may further include a device identifier of the terminal. For example, the device identifier of the terminal is a tag identifier (tag identifier, TID). Usually, the TID is an identifier allocated to the terminal by a manufacturer that manufactures the terminal, and may identify a capability, a characteristic, and the like supported by the terminal. Generally, both the terminal identifier and the device identifier of the terminal can uniquely identify the terminal. There is a correspondence between the terminal identifier and the device identifier. The correspondence is optionally defined inside an enterprise. For example, during internal planning of the enterprise, a correspondence between the TID (a TID value interval, a TID list, or a TID value range) and the EPC (an EPC value interval, an EPC list, or an EPC value range) may be defined. For example, if the first request message includes the device identifier of the terminal, the first information and the second information may further include the device identifier of the terminal.

Optionally, the first request message may further include a quantity of terminals that request terminal identifier writing. The quantity of terminals may be used to write terminal identifiers into the terminals in batches. The management network element may further determine a quantity of terminal identifiers and a quantity of pieces of authentication information based on the quantity of terminals. For example, the quantity of terminals, the quantity of terminal identifiers, and the quantity of pieces of authentication information are the same.

Optionally, the first request message may include the value range of the terminal identifier. In this way, a step of interacting with the data repository network element to obtain the value range of the terminal identifier may be omitted.

Optionally, in S301, the management network element generates the authentication information corresponding to the terminal identifier through internal implementation, or obtains the authentication information corresponding to the terminal identifier by interacting with another network element (for example, an authentication server). Therefore, the management network element determines the authentication information corresponding to the terminal identifier.

Optionally, the first request message may include the terminal identifier and the authentication information corresponding to the terminal identifier. Therefore, the management network element may directly determine the terminal identifier and the authentication information corresponding to the terminal identifier.

In a possible implementation, the application network element may further send a second request message to the management network element. The second request message includes the value range of the terminal identifier. In S301, the management network element may determine the terminal identifier based on the value range that is of the terminal identifier and that is included in the second request message. In this way, a step in which the management network element interacts with the data repository network element to obtain the value range of the terminal identifier may be omitted.

In a possible implementation, in S301, the application network element may further send a third request message to the management network element. The third request message includes the terminal identifier and the authentication information. Therefore, the management network element may directly determine the terminal identifier and the authentication information. A step in which the management network element generates the authentication information or obtains the authentication information by interacting with another network element may be omitted, and a step in which the management network element interacts with the data repository network element to obtain the value range of the terminal identifier and determines the terminal identifier based on the value range of the terminal identifier may also be omitted.

Optionally, if the second request message or the third request message includes the device identifier of the terminal, the first information and the second information may further include the device identifier of the terminal.

Optionally, the second request message or the third request message may further include the quantity of terminals that request terminal identifier writing.

In S302, after receiving the first information, the writing device may perform the writing operation, to be specific, write the terminal identifier and the authentication information into the terminal.

In a possible implementation, the terminal is a terminal identified by the terminal identifier.

In another possible implementation, the first information includes the device identifier of the terminal, and the terminal is a terminal corresponding to the device identifier. In other words, in S302, the writing device may write the terminal identifier and the authentication information into the terminal corresponding to the device identifier.

The writing device may determine, depending on whether the writing operation succeeds or fails, that the execution result is a writing success or a writing failure.

In a possible implementation, in S304, when the execution result is the writing success, the management network element sends the second information to the data repository network element.

In a possible implementation, the management network element and the writing device may communicate with each other through a control plane.

For example, when the writing device is the user equipment, the writing device registers with a mobility management network element. In S302, the management network element may send the first information to the writing device via the mobility management network element with which the writing device registers.

A registration message for registering with the mobility management network element by the writing device may include an identifier of the writing device. The identifier of the writing device is an identifier used when the writing device registers with the network as the user equipment, and may also uniquely identify the writing device. The management network element may further send the identifier of the writing device to the mobility management network element, and the mobility management network element may determine, based on the identifier of the writing device, to forward the first information to the writing device corresponding to the identifier.

In another possible implementation, the management network element and the writing device may communicate with each through a user plane.

For example, the writing device registers with the management network element. The writing device may send the second request message to the management network element. Correspondingly, the management network element receives a fourth request message. The fourth request message is used by the writing device to register with the management network element. More specifically, the writing device may send the fourth request message to the management network element through the user plane, in other words, the management network element may receive the fourth request message through the user plane. In S302, the management network element may send the first information to the writing device through the user plane, and the writing device receives the first information through the user plane.

In S304, after receiving the second information, the data repository network element may store the terminal identifier and the authentication information. In this way, the terminal is subsequently managed. For example, tag registration is authorized, the tag is authenticated, and tag inventory is authorized. For example, the data repository network element may send the second information to an authentication server network element. The second information is used by the authentication server network element to authenticate and authorize the terminal.

For example, in the 5G network, the data repository network element may include the UDM and/or a unified data repository (unified data repository, UDR), or may be another network element (for example, an NRF) having a data repository function.

For example, in the 5G network, the authentication server network element may be an AUSF, or may be another network element having an authentication service function.

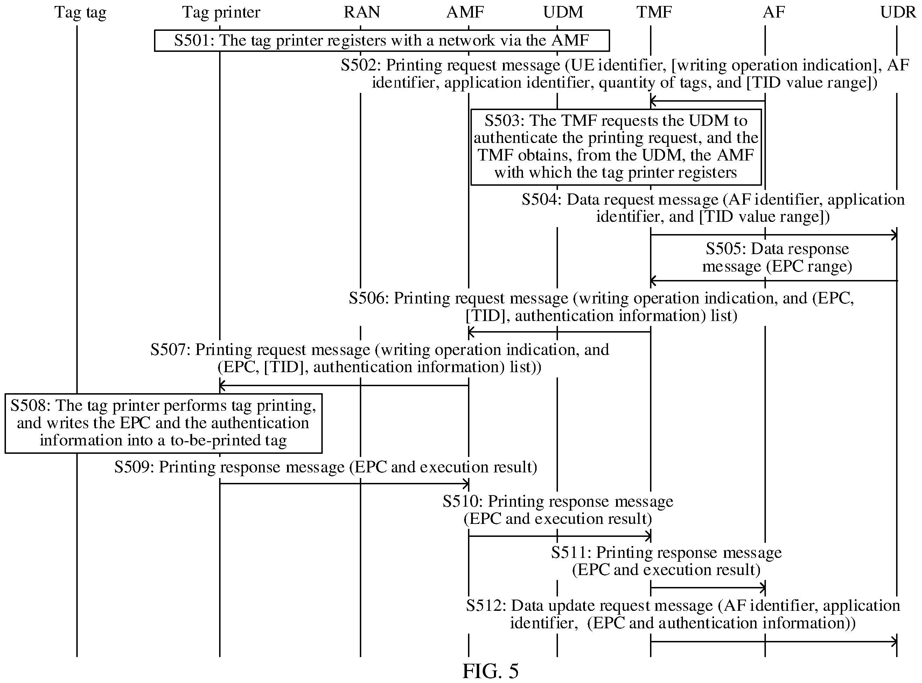

According to the embodiment in FIG. 3, the following describes, by using specific embodiments in FIG. 4 to FIG. 11, the information writing method provided in embodiments of this application. Steps in FIG. 5, FIG. 7, FIG. 9, or FIG. 11 and the steps in FIG. 3 may be mutually referenced, and terms and concepts may also be mutually referenced.

Embodiment 1: A writing device registers with a network as UE, and a management network element communicates with the writing device through a control plane.

A network architecture to which this embodiment is applicable is shown in FIG. 4. The writing device is a tag printer, the terminal is a tag, the management network element is a TMF, a mobility management network element is an AMF, an application network element is an AF, and the TMF separately interfaces with the AMF and the AF. Optionally, the network architecture includes an NEF.

The AMF is responsible for managing access control of the tag, the NEF is responsible for providing a tag printing capability for a third party, the TMF is responsible for managing and controlling tag printing, and a UDR is responsible for storing a correspondence between an EPC and authentication information of the tag, to authenticate and authorize the tag when the tag subsequently accesses the network.

Based on FIG. 4, for an information writing process, refer to FIG. 5. The tag printer registers with the network as the UE, the AF requests the network to print the tag, a tag printing indication indicates that the request is used to request to print the tag, an application identifier identifies a requested application, a quantity of tags identifies a quantity of tags requested to be printed, and a TID code is an identifier configured by a tag manufacturer for the tag. The TMF network element obtains an available EPC range from the UDR based on the application identifier. For the EPC range, it indicates that the EPC printed for the tag may be selected from the range. The TMF sends the correspondence list of the EPC and the authentication information to the tag printer via the AMF. The tag printer prints the tag. The TMF stores, in the UDR, the correspondence list of the EPC and the authentication information based on a printing result. Subsequently, after the tag accesses the network, the network may authenticate the tag based on the EPC and the authentication information that are stored in the UDR.

The information writing process shown in FIG. 5 includes the following steps.

S501: A tag printer registers with a network via an AMF.

In S501, the tag printer registers with the network as UE via the AMF, and the tag printer provides a UE identifier, for example, a subscription concealed identifier (subscription concealed identifier, SUCI), for accessing the network as the UE.

S502: An AF sends a printing request message to a TMF, where the printing request message includes the UE identifier, a tag printing request indication (also referred to as a writing operation indication, which is optional), an AF identifier, an application identifier, a quantity of tags requested to be printed, and a TID value range (optional).

In S502, an operator network may implement information writing based on a request of a third-party application, and the operator network may participate in the information writing process, to implement subscription management on the tag.

S503: The TMF requests a UDM to authenticate the printing request, and the TMF obtains, from the UDM, the AMF with which the tag printer registers.

If the TMF is integrated into the UDM, S503 may be considered as internal interaction.

S504: The TMF sends a data request message to a UDR, where the data request message includes the AF identifier, the application identifier, and the TID value range (optional).

The data request message includes at least one of the AF identifier and the application identifier.

S505: The UDR sends a data response message to the TMF, where the data response message includes an EPC range.

The EPC range is an EPC range that is available for the tag and that corresponds to the AF identifier and/or the application identifier.

The TMF may determine, in the EPC range, each EPC (in one or more EPCs corresponding to the quantity of tags) and authentication information corresponding to each EPC. The TMF generates the authentication information corresponding to each EPC through internal implementation or obtains the authentication information corresponding to each EPC by interacting with another network element (for example, an authentication server). In S505, the TMF may obtain the available EPC range from the UDR, and determine the EPC from the EPC range, to enhance control over the tag. If a plurality of EPCs are determined from the EPC range, a plurality of pieces of tag information may be further written in batches.

S504 and S505 are optional steps.

Optionally, if the TMF locally stores the EPC range corresponding to the AF identifier and/or the application identifier, S505 may be omitted.

In a possible implementation, the AF may provide the EPC range in S502. In this way, S504 and S505 may be omitted, and other steps remain unchanged. In a possible implementation, the AF may provide a correspondence list of the EPC and the authentication information in S502. In this way, S504 and step S505 may be omitted, and other steps remain unchanged.

S506: The TMF sends a printing request message to the AMF, where the printing request message includes the writing operation indication and the correspondence list of the EPC and the authentication information. Optionally, the correspondence list of the EPC and the authentication information further includes a TID.

S507: The AMF sends the printing request message to the tag printer, where the printing request message includes the writing operation indication and the correspondence list of the EPC and the authentication information.

The correspondence list of the EPC and the authentication information further optionally includes the TID.

S508: The tag printer performs tag printing, and writes the EPC and the authentication information into a to-be-printed tag.

If the correspondence between the EPC and the authentication information includes the TID, the tag printer may first find a tag corresponding to the TID, and then write the EPC and the authentication information into the tag corresponding to the TID. Writing the EPC and the authentication information into the tag together can facilitate subsequent authentication management on the tag, and improve tag security.

S509: The tag printer sends a printing response message to the AMF, where the printing response message includes a correspondence between the EPC and an execution result.

Optionally, the correspondence between the EPC and the execution result further includes the TID.

S510: The AMF sends the printing response message to the TMF, where the printing response message includes the correspondence between the EPC and the execution result.

Optionally, the correspondence between the EPC and the execution result further includes the TID.

S511: The TMF sends the printing response message to the AF, where the printing response message includes the correspondence between the EPC and the execution result.

Optionally, the correspondence between the EPC and the execution result further includes the TID.

S512: The TMF sends a data update request message to the UDR, where the data update request message includes the AF identifier, the application identifier, and the correspondence between the EPC and the authentication information. The data update request message includes at least one of the AF identifier and the application identifier.

Optionally, the correspondence list of the EPC and the authentication information further includes the TID.

After the correspondence between the EPC and the authentication information is stored in the UDR, subsequently, when the tag registers with the network, the network may manage the tag, for example, authorize tag registration, authenticate the tag, and authorize an inventory operation on the tag, so that the operator network manages the tag, and control of the operator network over the tag is enhanced.

In a possible implementation, the TMF is integrated into the NEF in FIG. 4. A procedure in which the NEF implements information writing is similar to the procedure shown in FIG. 5, and the TMF is replaced with the NEF.

In a possible implementation, FIG. 4 includes the TMF and the NEF. A procedure of implementing information writing is similar to the procedure shown in FIG. 5. The AF may first interact with the NEF, and then the NEF interacts with the TMF; or the AMF may first interact with the TMF, and then the TMF interacts with the NEF. In addition, authorizing the printing request message may be completed through interaction between the NEF and the UDM.

In a possible implementation, in S503, the TMF may not obtain the AMF with which the tag printer registers, but send the printing request message to the UDM in S506, and then the UDM sends the printing request message to the AMF with which the tag printer registers.

In this embodiment, the operator network performs tag printing based on the request of the third-party application. The operator network may participate in a tag printing process, so that the operator implements subscription management on the tag. In the tag printing process, the TMF may determine the EPC and the authentication information of the tag based on the request, and send the EPC and the authentication information to the tag printer by using control plane signaling, to print the tag. In addition, the TMF stores, in the UDR, the EPC and the authentication information of the tag as subscription information of the tag, to implement subscription management on the tag. When the UE subsequently accesses the network, the operator network may authenticate the tag based on the subscription information stored in the UDR, to enhance control of the operator network over the tag.

Embodiment 2: A writing device registers with a network as UE, and a management network element communicates with the writing device through a user plane.

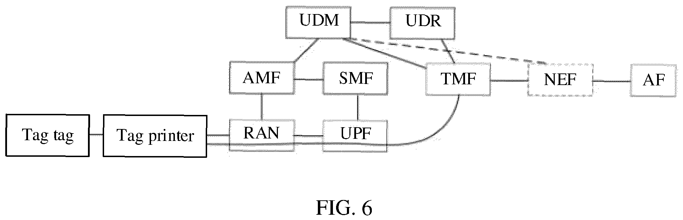

A network architecture to which this embodiment is applicable is shown in FIG. 6. The writing device is a tag printer, the terminal is a tag, the management network element is a TMF, a mobility management network element is an AMF, an application network element is an AF, and the tag printer directly interfaces with the TMF. Optionally, the network architecture includes an NEF. A similarity between FIG. 6 and FIG. 4 is not described herein.

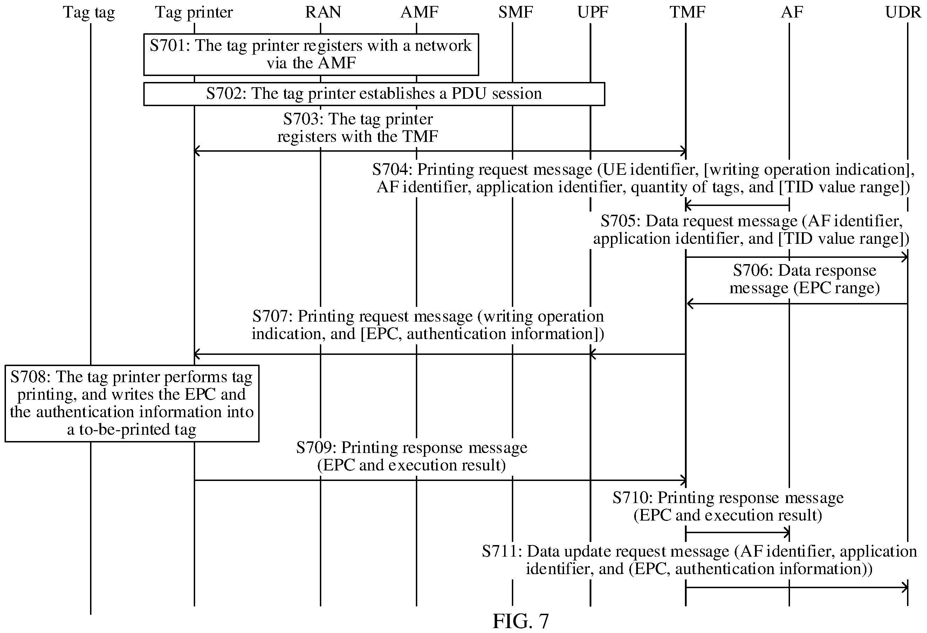

Based on FIG. 6, for an information writing process, refer to FIG. 7. The tag printer registers with the network as the UE and establishes a PDU session. The tag printer registers with the TMF. The AF requests the network to print the tag. The TMF network element obtains an available EPC range from a UDR. The TMF sends a correspondence list of an EPC and authentication information to the tag printer through the user plane. The tag printer prints the tag. The TMF stores, in the UDR, the correspondence list of the EPC and the authentication information based on a printing result.

The information writing process shown in FIG. 7 includes the following steps.

For a process of S701, refer to S501.

S702: A tag printer establishes a PDU session.

In a process of PDU session establishment, an SMF returns an address of a TMF to the tag printer.

S703: The tag printer registers with the TMF, where a registration message carries a UE identifier.

In S703, based on the address of the TMF in S702, the tag printer interacts with the TMF and registers with the TMF.

If the address of the TMF is not returned in S702, the tag printer may obtain the address of the TMF in a manner such as configuration or domain name system (domain name system, DNS) query.

For a process of S704, refer to S502.

For a process of S705 and S706, refer to S504 and S505.

S705 and S706 are optional steps. In a possible implementation, an AF may provide an EPC range in S704. In this way, S705 and S706 may be omitted, and other steps remain unchanged. In a possible implementation, the AF may provide a correspondence list of an EPC and authentication information in S704. In this way, S705 and step S706 may be omitted, and other steps remain unchanged.

S707: The TMF sends a printing request message to the tag printer, where the printing request message includes a writing operation indication and the correspondence list of the EPC and the authentication information.

Optionally, the printing request message further includes a TID.

Optionally, the correspondence list of the EPC and the authentication information further includes the TID.

For a process of S708, refer to S508.

S709: The tag printer sends a printing response message to the TMF, where the printing response message includes a correspondence between the EPC and an execution result.

Optionally, the correspondence between the EPC and the execution result further includes the TID.

For a process of S710, refer to S511.

For a process of S711, refer to S512.

In a possible implementation, the TMF is integrated into the NEF in FIG. 6. A procedure in which the NEF implements information writing is similar to the procedure shown in FIG. 7, and the TMF is replaced with the NEF.

In a possible implementation, FIG. 6 includes the TMF and the NEF. A procedure of implementing information writing is similar to the procedure shown in FIG. 7. The AF may first interact with the NEF, and then the NEF interacts with the TMF; or the AMF may first interact with the TMF, and then the TMF interacts with the NEF. In addition, authorizing the printing request message may be completed through interaction between the NEF and a UDM.

In this embodiment, an operator network performs tag printing based on a request of a third-party application. The operator network may participate in a tag printing process, so that the operator implements subscription management on the tag. In the tag printing process, the TMF may determine the EPC and the authentication information of the tag based on the request, and send the EPC and the authentication information to the tag printer through the user plane, to print the tag. In addition, the TMF stores, in the UDR, the EPC and the authentication information of the tag as subscription information of the tag, to implement subscription management on the tag. When the UE subsequently accesses the network, the operator network may authenticate the tag based on the subscription information stored in the UDR, to enhance control of the operator network over the tag.

Embodiment 3: An access network element (namely, a writing device) having a tag printing function establishes a connection to a mobility management network element, and a management network element communicates with the access network element through a control plane.

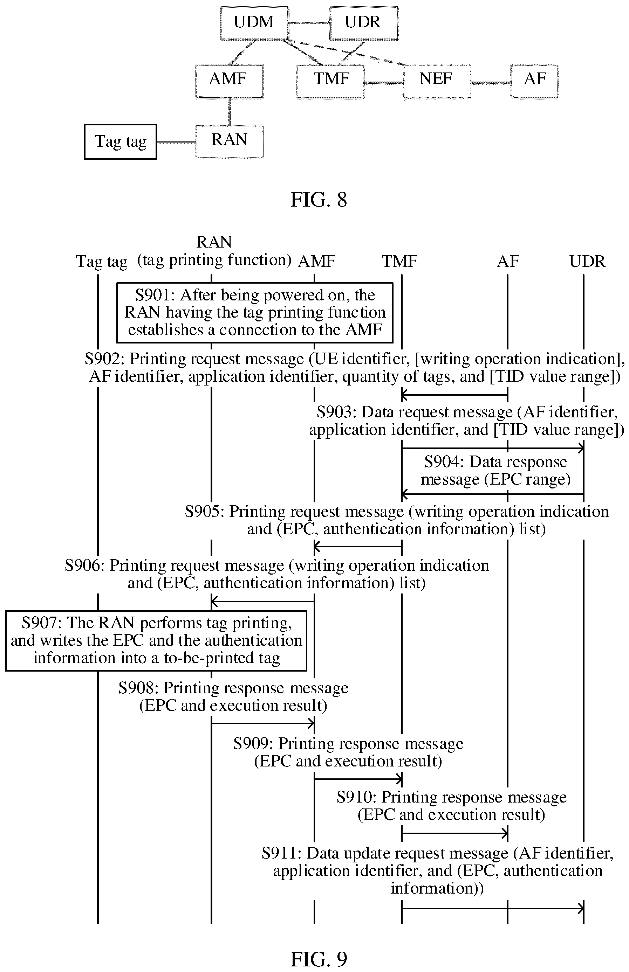

A network architecture to which this embodiment is applicable is shown in FIG. 8. The writing device is a RAN having a tag printing function, a terminal is a tag, the management network element is a TMF, the mobility management network element is an AMF, and an application network element is an AF. Optionally, the network architecture includes an NEF. A similarity between FIG. 8 and FIG. 4 is not described herein.

Based on FIG. 8, for an information writing process, refer to FIG. 9. After being powered on, the RAN having the tag printing function establishes a connection to the AMF. The AF requests a network to print the tag. The TMF network element obtains an available EPC range from a UDR. The TMF sends a correspondence list of an EPC and authentication information to the RAN via the AMF. The RAN prints the tag. The TMF stores, in the UDR, the correspondence list of the EPC code and the information based on a printing result.

The information writing process shown in FIG. 9 includes the following steps.

S901: After being powered on, a RAN having a tag printing function establishes a connection to an AMF.

The RAN provides a base station identifier.

For a process of S902, refer to S502.

For a process of S903 to S905, refer to S504 to S506.

S903 and S904 are optional steps. In a possible implementation, an AF may provide an EPC range in S902. In this way, S903 and S904 may be omitted, and other steps remain unchanged. In a possible implementation, the AF may provide the correspondence list of the EPC and the authentication information in S902. In this way, S903 and step S904 may be omitted, and other steps remain unchanged.

S906: The AMF sends a printing request message to the RAN, where the printing request message includes a writing operation indication and the correspondence list of the EPC and the authentication information.

Optionally, the correspondence list of the EPC and the authentication information further includes a TID.

S907: The RAN performs tag printing, and writes the EPC and the authentication information into a to-be-printed tag.

If the correspondence between the EPC and the authentication information includes the TID, a tag printer may first find a tag corresponding to the TID, and then write the EPC and the authentication information into the tag corresponding to the TID.

S908: The RAN sends a printing response message to the AMF, where the printing response message includes a correspondence between the EPC and an execution result.

Optionally, the correspondence between the EPC and the execution result further includes the TID.

For a process of S909 to S911, refer to S510 to S512.

After the correspondence between the EPC and the authentication information is stored in a UDR, the tag may be subsequently managed.

In a possible implementation, the TMF is integrated into the NEF in FIG. 8. A procedure in which the NEF implements information writing is similar to the procedure shown in FIG. 9, and the TMF is replaced with the NEF.

In a possible implementation, FIG. 8 includes the TMF and the NEF. A procedure of implementing information writing is similar to the procedure shown in FIG. 9. The AF may first interact with the NEF, and then the NEF interacts with the TMF; or the AMF may first interact with the TMF, and then the TMF interacts with the NEF. In addition, authorizing the printing request message may be completed through interaction between the NEF and a UDM.

In this embodiment, the RAN integrates the tag printing function, and the TMF interacts with the RAN by using a control plane message. An operator network may participate in a tag printing process, so that the operator network implements subscription management on the tag. In addition, the TMF stores, in the UDR, the EPC and the authentication information of the tag as subscription information of the tag, to implement subscription management on the tag. When the UE subsequently accesses the network, the operator network may authenticate the tag based on the subscription information stored in the UDR, to enhance control of the operator network over the tag.

Embodiment 4: An access network element (namely, a writing device) having a tag printing function establishes a connection to a mobility management network element, and a management network element communicates with the access network element through a user plane.

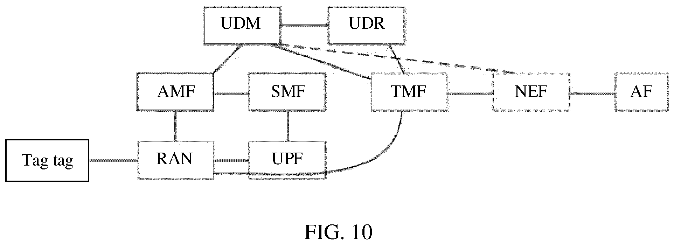

A network architecture to which this embodiment is applicable is shown in FIG. 10. The writing device is a RAN having the tag printing function, a terminal is a tag, the management network element is a TMF, the mobility management network element is an AMF, an application network element is an AF, and the RAN directly interfaces with the TMF. Optionally, the network architecture includes an NEF. A similarity between FIG. 10 and FIG. 4 is not described herein.

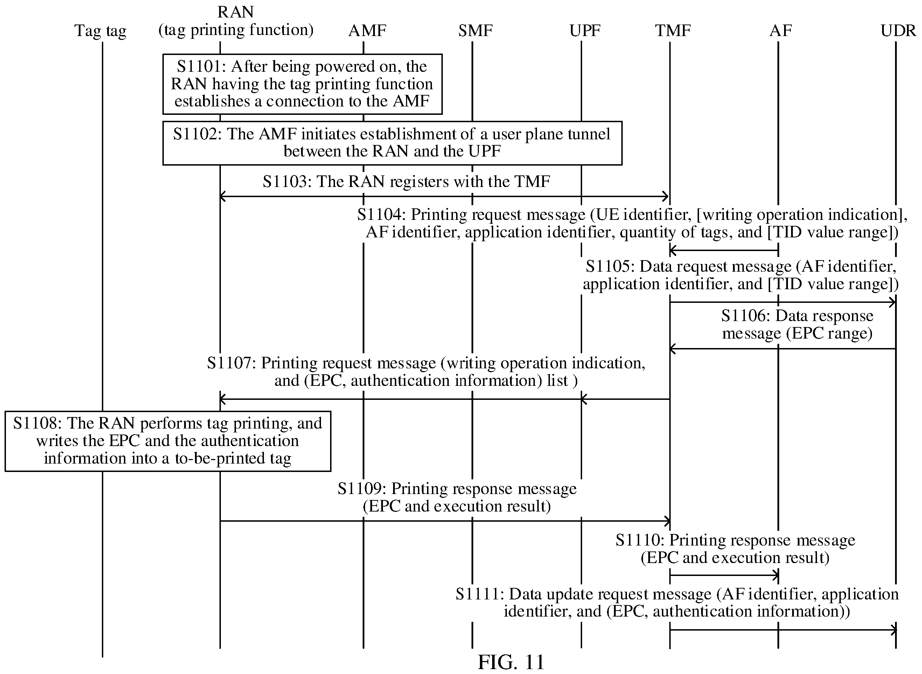

Based on FIG. 10, for an information writing process, refer to FIG. 11. After being powered on, the RAN having the tag printing function establishes a connection to the AMF, and the AMF initiates establishment of a user plane tunnel between the RAN and a UPF. The RAN interacts with the TMF for registration. The AF requests a network to print the tag. The TTMF sends a correspondence list of an EPC and authentication information to the RAN. The RAN prints the tag. The TMF stores, in the UDR, the correspondence list of the EPC and the authentication information based on a printing result.

The information writing process shown in FIG. 11 includes the following steps.

For a process of S1101, refer to S901.

S1102: An AMF initiates establishment of a user plane tunnel between a RAN and a UPF.

S1103: The RAN registers with a TMF.

In S1103, the RAN interacts with the TMF and registers with the TMF, and the RAN provides a base station identifier.

For a process of S1104, refer to S502.

For a process of S1105 and S1106, refer to S504 and S505.

S1105 and S1106 are optional steps. In a possible implementation, an AF may provide an EPC range in S1104. In this way, S1105 and S1106 may be omitted, and other steps remain unchanged. In a possible implementation, the AF may provide a correspondence list of an EPC and authentication information in S1104. In this way, S1105 and step S1106 may be omitted, and other steps remain unchanged.

S1107: The TMF sends a printing request message to the RAN, where the printing request message includes a writing operation indication and the correspondence list of the EPC and the authentication information.

Optionally, the correspondence list of the EPC and the authentication information further includes a TID.

For a process of S1108, refer to S907.

S1109: The RAN sends a printing response message to the TMF, where the printing response message includes a correspondence between the EPC and an execution result.

Optionally, the correspondence between the EPC and the execution result further includes the TID.

For a process of S1110 and S1111, refer to S511 and S512.

After the correspondence between the EPC and the authentication information is stored in a UDR, the tag may be subsequently managed.

In a possible implementation, the TMF is integrated into the NEF in FIG. 10. A procedure in which the NEF implements information writing is similar to the procedure shown in FIG. 11, and the TMF is replaced with the NEF.

In a possible implementation, FIG. 10 includes the TMF and the NEF. A procedure of implementing information writing is similar to the procedure shown in FIG. 11. The AF may first interact with the NEF, and then the NEF interacts with the TMF; or the AMF may first interact with the TMF, and then the TMF interacts with the NEF. In addition, authorizing the printing request message may be completed through interaction between the NEF and a UDM.

In this embodiment, the RAN integrates the tag printing function, a user plane tunnel is established between the RAN and the TMF, and the TMF interacts with the RAN through the user plane. An operator network may participate in a tag printing process, so that the operator network implements subscription management on the tag. In addition, the TMF stores, in the UDR, the EPC and the authentication information of the tag as subscription information of the tag, to implement subscription management on the tag. When the UE subsequently accesses the network, the operator network may authenticate the tag based on the subscription information stored in the UDR, to enhance control of the operator network over the tag.

In the embodiment 1 to the embodiment 4, the third-party application requests a 3rd generation partnership project (3rd generation partnership project, 3GPP) network to print the tag. In the tag printing process, the network stores information such as the EPC and the authentication information of the tag, to implement subscription management on the tag. The 3GPP network provides tag printing and subscription management capabilities for the third-party application. It should be noted that the foregoing embodiments may be used separately, or may be used in combination.

The terms "system" and "network" may be used interchangeably in embodiments of this application. In descriptions of embodiments of this application, "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more than two. In addition, it should be understood that, in the descriptions of this application, the terms "first", "second", "third", and the like are merely intended for differentiation and description and shall not be understood as indication or implication of relative importance, or indication or implication of an order. Reference to "an embodiment", "some embodiments", or the like described in this specification indicates that one or more embodiments of this application include a specific feature, structure, or feature described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner. The method and the apparatus are based on a same technical concept or similar technical concepts. Because problem-resolving principles of the method and the apparatus are similar, mutual reference may be made to implementation of the apparatus and the method, and repeated parts are not described.

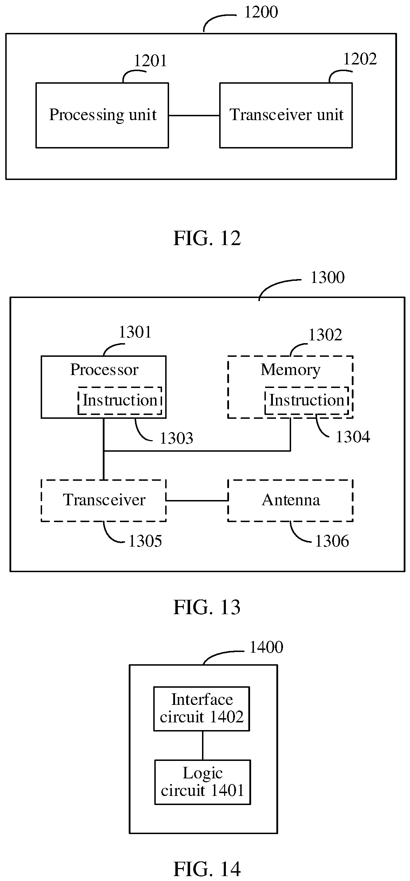

Based on a same technical concept as the foregoing information writing method, embodiments of this application further provide a communication apparatus. As shown in FIG. 12, the communication apparatus 1200 includes a processing unit 1201 and a transceiver unit 1202. Optionally, a function implemented by the transceiver unit 1202 may be completed by a communication interface, and the transceiver unit 1202 may be integrated by a receiving unit and a sending unit. The communication apparatus 1200 may be a management network element, a writing device, or a data repository network element, or may be located in the management network element, the writing device, or the data repository network element. The communication apparatus 1200 may be configured to implement the method described in the foregoing method embodiments. For example, the communication apparatus 1200 can perform the steps performed by the management network element, the writing device, or the data repository network element in the method in FIG. 3 to FIG. 11.

In a possible embodiment, the communication apparatus 1200 is used in the management network element.

For example, the processing unit 1201 is configured to determine a terminal identifier and authentication information corresponding to the terminal identifier.

The transceiver unit 1202 is configured to: send first information to a writing device, where the first information includes the terminal identifier and the authentication information, allowing the terminal identifier and the authentication information to be written into a terminal; obtain an execution result from the writing device; and send second information to a data repository network element based on the execution result, where the second information includes the terminal identifier and the authentication information.

In an implementation, the transceiver unit 1202 is further configured to receive a first request message from an application network element, where the first request message includes writing operation indication information and application information, and the application information is used to determine a value range of the terminal identifier.

In an implementation, the transceiver unit 1202 is further configured to: send an application identifier to the data repository network element; and receive the value range of the terminal identifier from the data repository network element, where the value range of the terminal identifier corresponds to an application identifier.

The processing unit 1201 is specifically configured to determine the terminal identifier based on the value range of the terminal identifier.

In an implementation, the transceiver unit 1202 is further configured to receive a second request message from an application network element, where the second request message includes a value range of the terminal identifier.

The processing unit 1201 is specifically configured to determine the terminal identifier based on the value range of the terminal identifier.

In an implementation, the processing unit 1201 is specifically configured to generate the authentication information corresponding to the terminal identifier.

In an implementation, the transceiver unit 1202 is further configured to obtain the authentication information from another network element.

In an implementation, the transceiver unit 1202 is further configured to receive a third request message from an application network element, where the third request message includes the terminal identifier and the authentication information.

In an implementation, if the first request message, the second request message, or the third request message further includes a device identifier of the terminal, the first information and the second information further include the device identifier.

In an implementation, the first request message, the second request message, or the third request message includes a quantity of terminals that request terminal identifier writing. The processing unit 1201 is further configured to determine a quantity of terminal identifiers and a quantity of pieces of authentication information based on the quantity of terminals.

In an implementation, the writing device is user equipment or an access network element having a writing function.

In an implementation, when the writing device is the user equipment, the transceiver unit 1202 is specifically configured to send the first information to the writing device via a mobility management network element with which the writing device registers.

In an implementation, the transceiver unit 1202 is further configured to send an identifier of the writing device to the mobility management network element.

In an implementation, the transceiver unit 1202 is further configured to receive a fourth request message from the writing device, where the fourth request message is used by the writing device to register with the management network element.

In an implementation, the transceiver unit 1202 is specifically configured to receive the fourth request message from the writing device through a user plane.

The transceiver unit 1202 is specifically configured to send the first information to the writing device through the user plane.

In an implementation, the terminal identifier includes an EPC.

In another possible embodiment, the communication apparatus 1200 is used in the writing device.

For example, the transceiver unit 1202 is configured to receive first information from a management network element, where the first information includes a terminal identifier and authentication information corresponding to the terminal identifier.

The processing unit 1201 is configured to write the terminal identifier and the authentication information into a terminal.

The transceiver unit 1202 is configured to send an execution result to the management network element.

In an implementation, the writing device is user equipment or an access network element having a writing function.

In an implementation, when the writing device is the user equipment, the transceiver unit 1202 is specifically configured to receive the first information from the management network element via a mobility management network element with which the writing device registers.

In an implementation, the transceiver unit 1202 is further configured to send a fourth request message to the management network element, where the fourth request message is used by the writing device to register with the management network element.

In an implementation, the transceiver unit 1202 is specifically configured to send a second request message to the management network element through a user plane.

The transceiver unit 1202 is specifically configured to receive the first information from the management network element through the user plane.

In an implementation, the first information further includes a device identifier of the terminal. The processing unit 1201 is specifically configured to write the terminal identifier and the authentication information into the terminal corresponding to the device identifier.

In an implementation, the terminal identifier includes an EPC.

In still another possible embodiment, the communication apparatus 1200 is used in the data repository network element.

For example, the transceiver unit 1202 is configured to receive second information from a management network element, where the second information includes a terminal identifier and authentication information corresponding to the terminal identifier.

The processing unit 1201 is configured to store the terminal identifier and the authentication information.

In an implementation, the transceiver unit 1202 is further configured to: receive an application identifier from the management network element; and send, to the management network element, a value range that of the terminal identifier and that corresponds to the application identifier.

In an implementation, the transceiver unit 1202 is further configured to send the second information to an authentication server network element, where the second information is used by the authentication server network element to authenticate the terminal.

In an implementation, the terminal identifier includes an EPC.

It should be noted that division into the modules in embodiments of this application is an example, and is merely logical function division. During actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit. For example, the transceiver unit may include a receiving unit and/or a sending unit.

When the integrated unit is implemented in the form of the software functional unit and sold or used as an independent product, the integrated unit may be stored in a computer-readable storage medium. Based on such an understanding, the integrated unit may be stored in a storage medium as a computer software product, and includes several instructions for instructing a computer device (which may be a personal computer, a server, or a network device) or a processor (processor) to perform all or a part of the steps of the method in embodiments of this application.

As shown in FIG. 13, an embodiment of this application further provides a diagram of a structure of a communication apparatus 1300. The communication apparatus 1300 may be configured to implement the method described in the foregoing method embodiments. Refer to the descriptions in the foregoing method embodiments. For example, the communication apparatus 1300 can perform the steps performed by the management network element, the writing device, or the data repository network element in the method in FIG. 3 to FIG. 11.

The communication apparatus 1300 includes one or more processors 1301. The processor 1301 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program. The communication apparatus may include a transceiver unit, configured to input (receive) and output (send) signals. For example, the transceiver unit may be a transceiver or a radio frequency chip.

The communication apparatus 1300 includes one or more processors 1301, and the one or more processors 1301 may implement the method in the foregoing embodiments. Optionally, the processor 1301 may further implement another function in addition to the method in the foregoing embodiments.

In a design, the processor 1301 may execute instructions, so that the apparatus 1300 performs the method described in the foregoing method embodiments. All or a part of the instructions may be stored in the processor 1301. For example, all or a part of instructions 1303 may be stored in the processor 1301, or instructions 1303 are stored in the processor 1301, and instructions 1304 are stored in a memory 1302 coupled to the processor. The processor 1301 may synchronously execute the instructions 1303 and the instructions 1304, so that the communication apparatus 1300 performs the method described in the foregoing method embodiments. The instructions 1303 and the instructions 1304 are also referred to as computer programs.

In another possible design, the communication apparatus 1300 may further include a circuit, and the circuit may implement functions in the foregoing method embodiments.

In still another possible design, the communication apparatus 1300 may include one or more memories 1302. The memory 1302 stores the instructions 1304, and the instructions may be run on the processor 1301, so that the apparatus 1300 performs the method described in the foregoing method embodiments. Optionally, the memory 1302 may further store data. Optionally, the processor 1301 may also store instructions and/or data. For example, the one or more memories 1302 may store the correspondences described in the foregoing embodiments, or the related parameters, the related tables, or the like in the foregoing embodiments. The processor and the memory may be separately disposed, or may be integrated.

In yet another possible design, the apparatus 1300 may further include a transceiver 1305 and an antenna 1306. The processor 1301 may be referred to as a processing unit, and controls the apparatus (the terminal or the base station). The transceiver 1305 may be referred to as a transceiver machine, a transceiver circuit, a transceiver unit, or the like, and is configured to implement a transceiver function of the apparatus by using the antenna 1306.

The processor may be a general-purpose central processing unit (central processing unit, CPU), a microprocessor, an application-specific integrated circuit (application-specific integrated circuit, ASIC), one or more integrated circuits configured to control program execution of the solutions of this application, a general-purpose processor, a digital signal processor (digital signal processor, DSP), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in a decoding processor and a software module. The software module may be in a storage medium, and the storage medium is located in a memory.

The memory may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and serves as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (synchronous link DRAM, SLDRAM), and a direct rambus random access memory (Direct Rambus RAM, DR RAM). It should be noted that the memory of the systems and methods described in this specification includes but is not limited to these and any memory of another proper type. The memory may independently exist and may be connected to the processor through a communication line. The memory may alternatively be integrated with the processor.

An embodiment of this application further provides a communication system, including a management network element, a writing device, and a data repository network element. The management network element, the writing device, and the data repository network element may implement the information writing method in any one of the foregoing method embodiments.

An embodiment of this application further provides a computer-readable medium. The computer-readable medium stores a computer program. When the computer program is executed by a computer, the information writing method in any one of the foregoing method embodiments is implemented.

An embodiment of this application further provides a computer program product, including a computer program. When the computer program is executed by a computer, the information writing method in any one of the foregoing method embodiments is implemented.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer instructions are loaded and executed on a computer, all or a part of the procedures or functions according to embodiments of this application are generated. The computer may be the foregoing communication apparatus. The computer instructions may be stored in a computer-readable storage medium, or may be transmitted from one computer-readable storage medium to another computer-readable storage medium. The computer-readable storage medium may be the foregoing storage medium or the foregoing memory.

In a possible design, when the foregoing communication apparatus is a chip, for example, a chip in a network device, or a chip in a terminal device, the processing unit or the processor 1301 may be one or more logic circuits, and the sending unit, the receiving unit, or the transceiver 1305 may be an input/output interface, or may be referred to as a communication interface, an interface circuit, an interface, or the like. Alternatively, the transceiver 1305 may be a sending unit and a receiving unit. The sending unit may be an output interface, and the receiving unit may be an input interface. The sending unit and the receiving unit are integrated into one unit, for example, an input/output interface. As shown in FIG. 14, a communication apparatus 1400 shown in FIG. 14 includes a logic circuit 1401 and an interface circuit 1402. In other words, the foregoing processing unit or the foregoing processor 1301 may be implemented by using the logic circuit 1401, and the transceiver unit or the transceiver 1305 may be implemented by using the interface circuit 1402. The logic circuit 1401 may be a chip, a processing circuit, an integrated circuit, a system on chip (system on chip, SoC), or the like. The interface circuit 1402 may be a communication interface, an input/output interface, or the like. In this embodiment of this application, the logic circuit and the interface circuit may be further coupled to each other. A specific connection manner of the logic circuit and the interface circuit is not limited in this embodiment of this application.

In some embodiments of this application, the logic circuit 1401 and the interface circuit 1402 may be configured to perform a function, an operation, or the like performed by the foregoing network function or the foregoing control plane function. The interface circuit 1402 may be configured to: receive a signal from another communication apparatus other than the communication apparatus 1400 and transmit the signal to the logic circuit 1401, or send a signal from the logic circuit 1401 to another communication apparatus other than the communication apparatus 1400. The logic circuit 1401 may be configured to implement any one of the foregoing method embodiments by executing code instructions.

For example, the interface circuit 1402 is configured to send first information to a writing device. For a function or an operation performed by the communication apparatus, refer to the foregoing method embodiments. Details are not described herein again.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by the hardware or the software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed systems, apparatuses, and methods may be implemented in other manners. For example, the described apparatus embodiments are merely examples. For example, division into the units is merely logical function division and may be in another division manner during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, in other words, may be located in one position, or may be distributed on a plurality of network units. A part or all of the units may be selected based on an actual requirement to achieve the objectives of the solutions of embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When this application is implemented by software, the foregoing functions may be stored in a computer-readable medium or transmitted as one or more instructions or code in the computer-readable medium. The computer-readable medium includes a computer storage medium and a communication medium. The communication medium includes any medium that facilitates transmission of a computer program from one place to another. The storage medium may be any available medium accessible to a computer.

In conclusion, the foregoing descriptions are merely embodiments of the technical solutions of this application, but are not intended to limit the protection scope of this application. Any modification, equivalent replacement, or improvement made within the principle of this application shall fall within the protection scope of this application.

## Claims

1. An information writing method, wherein the method comprises:
determining, by a management network element, a terminal identifier and authentication information corresponding to the terminal identifier;
sending, by the management network element, first information to a writing device, wherein the first information comprises the terminal identifier and the authentication information, allowing the terminal identifier and the authentication information to be written into a terminal;
obtaining, by the management network element, an execution result from the writing device; and
sending, by the management network element, second information to a data repository network element based on the execution result, wherein the second information comprises the terminal identifier and the authentication information.

2. The method according to claim 1, wherein before the sending, by the management network element, first information to a writing device, the method further comprises:
receiving, by the management network element, a first request message from an application network element, wherein the first request message comprises application information, and the application information is used to determine a value range of the terminal identifier.

3. The method according to claim 2, wherein before the determining, by a management network element, a terminal identifier, the method further comprises:
sending, by the management network element, the application information to the data repository network element; and
receiving, by the management network element, the value range of the terminal identifier from the data repository network element; and
the determining, by a management network element, a terminal identifier comprises:
determining, by the management network element, the terminal identifier based on the value range of the terminal identifier.

4. The method according to claim 1, wherein before the sending, by the management network element, first information to a writing device, the method further comprises:
receiving, by the management network element, a second request message from an application network element, wherein the second request message comprises a value range of the terminal identifier; and
the determining, by a management network element, a terminal identifier comprises:
determining, by the management network element, the terminal identifier based on the value range of the terminal identifier.

5. The method according to any one of claims 1 to 4, wherein the determining, by a management network element, authentication information corresponding to the terminal identifier comprises:
generating, by the management network element, the authentication information corresponding to the terminal identifier; or
obtaining, by the management network element, the authentication information from another network element.

6. The method according to claim 1, wherein before the sending, by the management network element, first information to a writing device, the method further comprises:
receiving, by the management network element, a third request message from an application network element, wherein the third request message comprises the terminal identifier and the authentication information.

7. The method according to claim 2, 4, or 6, wherein if the first request message, the second request message, or the third request message further comprises a device identifier of the terminal, the first information and the second information further comprise the device identifier.

8. The method according to claim 2, 4, or 6, wherein the first request message, the second request message, or the third request message comprises a quantity of terminals that request terminal identifier writing, and the method further comprises:
determining, by the management network element, a quantity of terminal identifiers and a quantity of pieces of authentication information based on the quantity of terminals.

9. The method according to any one of claims 1 to 8, wherein the writing device is user equipment or an access network element having a writing function.

10. The method according to claim 9, wherein when the writing device is the user equipment, the sending, by the management network element, first information to a writing device comprises:
sending, by the management network element, the first information to the writing device via a mobility management network element with which the writing device registers.

11. The method according to claim 10, wherein the method further comprises:
sending, by the management network element, an identifier of the writing device to the mobility management network element.

12. The method according to claim 9, wherein the method further comprises:
receiving, by the management network element, a fourth request message from the writing device, wherein the fourth request message is used by the writing device to register with the management network element.

13. The method according to claim 12, wherein the receiving, by the management network element, a fourth request message from the writing device comprises:
receiving, by the management network element, the fourth request message from the writing device through a user plane; and
the sending, by the management network element, first information to a writing device comprises:
sending, by the management network element, the first information to the writing device through the user plane.

14. An information writing method, wherein the method comprises:
receiving, by a writing device, first information from a management network element, wherein the first information comprises a terminal identifier and authentication information corresponding to the terminal identifier;
writing, by the writing device, the terminal identifier and the authentication information into a terminal; and
sending, by the writing device, an execution result to the management network element.

15. The method according to claim 14, wherein the writing device is user equipment or an access network element having a writing function.

16. The method according to claim 15, wherein when the writing device is the user equipment, the receiving, by a writing device, first information from a management network element comprises:
receiving, by the writing device, the first information from the management network element via a mobility management network element with which the writing device registers.

17. The method according to claim 15, wherein the method further comprises:
sending, by the writing device, a fourth request message to the management network element, wherein the fourth request message is used by the writing device to register with the management network element.

18. The method according to claim 17, wherein the sending, by the writing device, a fourth request message to the management network element comprises:
sending, by the writing device, the fourth request message to the management network element through a user plane; and
the receiving, by a writing device, first information from a management network element comprises:
receiving, by the writing device, the first information from the management network element through the user plane.

19. The method according to any one of claims 14 to 18, wherein the first information further comprises a device identifier of the terminal; and
the writing, by the writing device, the terminal identifier and the authentication information into a terminal comprises:
writing, by the writing device, the terminal identifier and the authentication information into the terminal corresponding to the device identifier.

20. An information writing method, wherein the method comprises:
receiving, by a data repository network element, second information from a management network element, wherein the second information comprises a terminal identifier and authentication information corresponding to the terminal identifier; and
storing, by the data repository network element, the terminal identifier and the authentication information.

21. The method according to claim 20, wherein the method further comprises:
receiving, by the data repository network element, application information from the management network element, wherein the application information is used to determine a value range of the terminal identifier; and
sending, by the data repository network element, the value range of the terminal identifier to the management network element.

22. The method according to claim 20 or 21, wherein the method further comprises:
sending, by the data repository network element, the second information to an authentication server network element, wherein the second information is used by the authentication server network element to authenticate a terminal corresponding to the terminal identifier.

23. A communication apparatus, wherein the apparatus comprises:
a processing unit, configured to determine a terminal identifier and authentication information corresponding to the terminal identifier; and
a transceiver unit, configured to: send first information to a writing device, wherein the first information comprises the terminal identifier and the authentication information, allowing the terminal identifier and the authentication information to be written into a terminal; obtain an execution result from the writing device; and send second information to a data repository network element based on the execution result, wherein the second information comprises the terminal identifier and the authentication information.

24. The apparatus according to claim 23, wherein the transceiver unit is further configured to receive a first request message from an application network element, wherein the first request message comprises application information, and the application information is used to determine a value range of the terminal identifier.

25. The apparatus according to claim 24, wherein the transceiver unit is further configured to: send the application information to the data repository network element; and receive the value range of the terminal identifier from the data repository network element; and
the processing unit is specifically configured to determine the terminal identifier based on the value range of the terminal identifier.

26. The apparatus according to claim 23, wherein the transceiver unit is further configured to receive a second request message from an application network element, wherein the second request message comprises a value range of the terminal identifier; and
the processing unit is specifically configured to determine the terminal identifier based on the value range of the terminal identifier.

27. The apparatus according to any one of claims 23 to 26, wherein the processing unit is specifically configured to generate the authentication information corresponding to the terminal identifier; or
the transceiver unit is further configured to obtain the authentication information from another network element.

28. The apparatus according to claim 23, wherein the transceiver unit is further configured to receive a third request message from an application network element, wherein the third request message comprises the terminal identifier and the authentication information.

29. The apparatus according to claim 24, 26, or 28, wherein if the first request message, the second request message, or the third request message further comprises a device identifier of the terminal, the first information and the second information further comprise the device identifier.

30. The apparatus according to claim 24, 26, or 28, wherein the first request message, the second request message, or the third request message comprises a quantity of terminals that request terminal identifier writing, and the processing unit is further configured to determine a quantity of terminal identifiers and a quantity of pieces of the authentication information based on the quantity of terminals.

31. The apparatus according to any one of claims 23 to 30, wherein the writing device is user equipment or an access network element having a writing function.

32. The apparatus according to claim 31, wherein when the writing device is the user equipment, the transceiver unit is specifically configured to send the first information to the writing device via a mobility management network element with which the writing device registers.

33. The apparatus according to claim 32, wherein the transceiver unit is further configured to send an identifier of the writing device to the mobility management network element.

34. The apparatus according to claim 31, wherein the transceiver unit is further configured to receive a fourth request message from the writing device, wherein the fourth request message is used by the writing device to register with the management network element.

35. The apparatus according to claim 34, wherein the transceiver unit is specifically configured to: receive the fourth request message from the writing device through a user plane; and send the first information to the writing device through the user plane.

36. A communication apparatus, wherein the apparatus comprises:
a transceiver unit, configured to receive first information from a management network element, wherein the first information comprises a terminal identifier and authentication information corresponding to the terminal identifier; and
a processing unit, configured to write the terminal identifier and the authentication information into a terminal, wherein
the transceiver unit is configured to send an execution result to the management network element.

37. The apparatus according to claim 36, wherein the communication apparatus is user equipment or an access network element having a writing function.

38. The apparatus according to claim 37, wherein when the communication apparatus is the user equipment, the transceiver unit is specifically configured to receive the first information from the management network element via a mobility management network element with which a writing device registers.

39. The apparatus according to claim 37, wherein the transceiver unit is further configured to send a fourth request message to the management network element, wherein the fourth request message is used by the writing device to register with the management network element.

40. The apparatus according to claim 39, wherein the transceiver unit is specifically configured to: send the fourth request message to the management network element through a user plane; and receive the first information from the management network element through the user plane.

41. The apparatus according to any one of claims 36 to 40, wherein the first information further comprises a device identifier of the terminal; and
the processing unit is specifically configured to write the terminal identifier and the authentication information into the terminal corresponding to the device identifier.

42. A communication apparatus, wherein the apparatus comprises:
a transceiver unit, configured to receive second information from a management network element, wherein the second information comprises a terminal identifier and authentication information corresponding to the terminal identifier; and
a processing unit, configured to store the terminal identifier and the authentication information.

43. The apparatus according to claim 42, wherein the transceiver unit is further configured to: receive application information from the management network element, wherein the application information is used to determine a value range of the terminal identifier; and send the value range of the terminal identifier to the management network element.

44. The apparatus according to claim 42 or 43, wherein the transceiver unit is further configured to send the second information to an authentication server network element, wherein the second information is used by the authentication server network element to authenticate a terminal corresponding to the terminal identifier.

45. A communication apparatus, comprising a processor, wherein the processor is coupled to a memory; and
the processor is configured to execute a computer program or instructions stored in the memory, to enable the apparatus to perform the method according to any one of claims 1 to 22.

46. A communication apparatus, comprising a logic circuit and an interface circuit, wherein the interface circuit is configured to: receive a signal from another communication apparatus other than the communication apparatus, and transmit the signal to the logic circuit; or send a signal from the logic circuit to another communication apparatus other than the communication apparatus, and the logic circuit is configured to implement the method according to any one of claims 1 to 22 by executing code instructions.

47. A computer-readable storage medium, comprising a computer program or instructions, wherein when the computer program or the instructions are run on a computer, the method according to any one of claims 1 to 22 is performed.

48. A computer program product, comprising a computer program or instructions, wherein when the computer program or the instructions are run on a computer, the method according to any one of claims 1 to 22 is performed.

49. A communication system, comprising a management network element configured to perform the method according to any one of claims 1 to 13, a writing device configured to perform the method according to any one of claims 14 to 19, and a data repository network element configured to perform the method according to any one of claims 20 to 22.

50. A chip system, wherein the chip system comprises:
a processor and a memory, wherein the processor is coupled to the memory, the memory is configured to store a program or instructions, and when the program or the instructions are executed by the processor, the method according to any one of claims 1 to 22 is implemented.
